Europäisches Patentamt

European Patent Office

Office européen des brevets

(11) Veröffentlichungsnummer: **0 116 839**
**B1**

# (12) EUROPÄISCHE PATENTSCHRIFT

(45) Veröffentlichungstag der Patentschrift:
26.11.86

(21) Anmeldenummer: **84100282.7**

(22) Anmeldetag: **12.01.84**

(51) Int. Cl.⁴: **B 60 R 22/06,** B 60 R 22/08

(54) Vorrichtung zum Verlagern eines Gurtbandes.

(30) Priorität: **22.01.83 DE 3302163**

(43) Veröffentlichungstag der Anmeldung:
**29.08.84 Patentblatt 84/35**

(45) Bekanntmachung des Hinweises auf die Patenterteilung:
**26.11.86 Patentblatt 86/48**

(84) Benannte Vertragsstaaten:
**DE FR GB IT SE**

(56) Entgegenhaltungen:
**DE-A-2 822 055**
**US-A-3 893 704**
**US-A-4 345 780**

(73) Patentinhaber: **BAYERISCHE MOTOREN WERKE Aktiengesellschaft, Postfach 40 02 40 Petuelring 130, D-8000 München 40 (DE)**

(72) Erfinder: **Wimmer, Robert, Dipl.- Ing., Oberlaufing 3, D-8017 Ebersberg (DE)**
Erfinder: **Gürtler, Franz, Katharinenweg 14, D-8044 Unterschleissheim (DE)**

(74) Vertreter: **Dexheimer, Rolf, Bayerische Motoren Werke Aktiengesellschaft Postfach 40 02 40 Petuelring 130 - AJ- 31, D-8000 München 40 (DE)**

## Beschreibung

Die Erfindung bezieht sich auf eine Vorrichtung zum Verlagern eines Gurtbandes, wie sie im Oberbegriff des Hauptanspruches beschrieben ist.

Eine solche Vorrichtung zeigt die DE-A-28 22 055. Hier besteht das Führungselement aus einer Stange, deren hinteres Ende zu einem Mitnehmer umgebogen ist. Die dadurch starre Verbindung zwischen dem Führungselement und dem Mitnehmer wirkt sich in verschiedener Hinsicht nachteilig aus. Das zu verlagernde Gurtband eines nicht angelegten Sicherheitsgurtes, der für die Vordersitze eines Kraftfahrzeugs vorgesehen ist, erstreckt sich in der Regel längs der Mittelsäule, also hinter dem Türausschnitt. Will man it dem Mitnehmer der bekannten Vorrichtung, die in diesem Fall an der vorderen Fahrzeugtür vorgesehen sein muß, des Gurtband hintergreifen, so ist er über den Türausschnitt hinaus nech hinten zu verfahren. Die als Führungselement dienende Stange blockiert in dieser Stellung die Fahrzeugtür. Sie läßt sich von außen nicht mehr öffnen und versperrt dadurch den Zugang ins Fahrzeuginnere, beispielsweise bei einem Unfall. Diese Gefahr droht aber nicht nur während der Gurtholphase. Ganz allein kann sich die Stenge durch die bei einem Unfall auftretenden Kräfte nach hinten in die Blockierstellung verschieben.

Vorrichtungen der gattungsgemäßen Art sind vorwiegend für Kraftfahrzeuge der gehobenen Klasse vorgesehen. Sie müssen sich daher harmonisch ins Gesamtbild einordnen lassen. Sie sollten nech Möglichkeit nicht oder nur andeutungsweise in Erscheinung treten. Das läßt sich dadurch erreichen, daß die Führungsschiene in der Seitenwand eingelassen und wenigstens teilweise von der Wandverkleidung verdeckt ist. Bei einer Vorrichtung nach dem Stand der Technik ist dies jedoch nur bedingt möglich, da, wie bereits erwähnt, der Mitnehmer über den Türausschnitt hinaus verschoben werden muß. Außerdem wird der Mitnehmer immer sichtbar bleiben, auch wenn er um die Längsachse der Stange nach unten gedreht wird. Er liegt in diesem Fall an der Verkleidung auf. Daraus ergibt sich der weitere Nachteil, daß der Fahrgast Gefahr läuft, mit seiner Kleidung an ihm hängen zu bleiben.

Aufgabe der Erfindung ist es, eine gattungsgemäße Vorrichtung so weiterzubilden, daß der Mitnehmer ohne Blockierung der Fahrzeugtür das Gurtband hintergreifen kann und daß die Vorrichtung insgesamt nicht als störend empfunden wird.

Die Aufgabe wird erfindungsgemäß dadurch gelöst, daß der Mitnehmer beweglich em Führungselement gehalten ist.

Durch seine bewegliche Anordnung am Führungselement, läßt sich der Mitnehmer von einer nicht störenden Ruhelage in die Arbeitsstellung oder Trensportlage überführen. Dabei kann die Anordnung auf die verschiedenste Weise erfolgen. Sie kann beispielsweise so ausgelegt sein, daß der Mitnehmer in einer translatorischen, quer zur Fahrzeuglängsrichtung weisenden Bewegung in die jeweilige Stellung verfährt. In einer zweckmäßigen Ausführung ist der Mitnehmer jedoch drehbar am Führungselement gelagert. In diesem Fall vollführt er beim Übergang von der Ruhelage in die Arbeitsstellung eine Schwenkbewegung in das Fahrzeuginnere hinein.

Es ist vorteilhaft, wenn der Mitnehmer in seiner Ruhelage vollkommen hinter die innere Oberfläche der Fahrzeugseitenwand zurückverlagert ist. Er ist dann nicht mehr sichtbar und stellt auch keine Verletzungsgefahr dar. Sollte jedoch wegen der Platzverhältnisse oder anderen Gründen ein vollkommenes Versenken nicht in Frage kommen, so kann es auch zweckmäßig sein, den Mitnehmer etwas über die Oberfläche der Seitenwand vorstehen zu lassen.

Bei der erfindungsgemäßen Vorrichtung befinden sich die Führungsschiene und das Führungselement innerhalb der Seitenwand. Die Wandverkleidung überdeckt diese Bauelemente und sie weist lediglich einen schmalen Schlitz auf für das Hin- und Herbewegen des Mitnehmers.

Durch seine bewegliche Anlenkung Anordnung an dem Führungselement ist der Mitnehmer auch in der Lage, das Gurtband zu ergreifen, ohne daß des Führungselement jenseits des Türausschnitts verfahren müßte. Das soll der Ablauf eines Transportvorganges verdeutlichen mit einer Vorrichtung, bei der der Mitnehmer drehbar am Führungselement gehalten ist.

Wird die in eine vordere Fahrzeugtür eingebaute, erfindungsgemäße Vorrichtung in Gang gesetzt, sei es durch einen Türkontaktschalter oder einen bewußt betätigten Schalter oder sonstwie, fährt das Führungselement mit dem eingeklappten Mitnehmer in Richtung Fahrzeugfond. Eine Steuerkente oder -fläche - im einfachsten Falle wird sie durch die Kante des Türausschnittes gebildet - drängt den Mitnehmer aus seiner Lage und klappt ihn allmählich in die Transportlage. In der Transportlage steht er etwa senkrecht zur Führungsschiene und ragt in das Fahrzeuginnere hinein. Bevor er jedoch diese Lage endgültig erreicht, durchfährt er den Zwischenreum zwischen Gurtband und Mittelsäule und hintergreift bereits im halbausgeklappten Zustand das Gurtband. Geht er in seine endgültige Transportlage über, ist das Führungselement em Türrand oder dessen Nähe angelangt. Es entsteht so zu keiner Zeit eine Situation, in der die Fahrzeugtür durch das Führungselement oder den Mitnehmer blockiert wäre.

Beim weiteren Ablauf des Transportvorgangs dreht sich die Bewegungsrichtung um, und das Führungselement fährt nun in Fahrtrichtung nach vorne. Der Mitnehmer zieht dadurch das Gurtband in eine griffgünstige Position. Nachdem der Fahrzeuginsasse das Gurtband abgenommen hat, klappt der Mitnehmer in seine Ruhelage zurück. Das Zurückklappen erfolgt in einer bevorzugten Ausführung über einen Anschlag, der sich beispielsweise in der Türverkleidung oder an der Führungsschiene befindet. Das Führungselement weist hierfür einen gegen Federkraft verschiebbaren Sperriegel auf. Während des Gurttransportes greift der Sperriegel in eine Ausnehmung des ausgeklappten Mitnehmers oder eines mit ihm starr verbundenen Teiles und arretiert ihn in seiner Lage. Stößt der Mitnehmer am Anschlag an, wird der Sperriegel zurückgezogen. Er gibt den Mitnehmer frei, der dann in seine Ursprungs- oder Ruhelage zurückklappen kann. Dabei ist es vorteilhaft, wenn der Mitnehmer durch Federkraft in diese Lage zurückgedreht wird. Außerdem kann es zweckmäßig sein, am Mitnehmer eine zweite Ausnehmung vorzusehen, in die der Sperriegel beim eingeklappten Mitnehmer einrastet und ihn in seiner Lage hält.

Dieser Mechanismus wirkt auch dann, wenn der Mitnehmer während des Transportvorganges auf ein Hindernis stößt.

In einer vorteilhaften Ausführung ist der Mitnehmer während des Gurttransportes verriegelt. Beim Transportvorgang fährt der Mitnehmer bis zum Anschlag. Dabei wird in der Endphase eine auf das Führungselement wirkende Feder gespannt. Nimmt der Fahrgast den angebotenen Gurt ab, löst sich die Verriegelung. Sie gibt die Feder frei. Die Feder zieht nun den Mitnehmer gegen den Anschlag, der ihn wie derum in seine Ruhelage drängt.

Anstatt eine Feder zu spannen, kann auch das Führungselement nach Abnahme des Gurtbandes oder, wenn diese nicht erfolgt, nach einer bestimmten Zeitdauer auf andere Weise in der bisherigen Richtung fortbewegt werden bis der Mitnehmer in seine Ruhelage geklappt ist.

Der Transportvorgang kann nun beendet sein. Vorteilhafter jedoch ist es, wenn das Führungselement wieder ein Stück nach hinten in eine Ausgangsstellung fährt, aus der heraus beim nächsten Transportvorgang der Mitnehmer ohne große Zeitverzögerung herausgeklappt wird, um möglichst schnell dem Fahrzeuginsassen den Sicherheitsgurt anbieten zu können.

Wie bereits erwähnt, kann die Kante des Türausschnittes als Anschlag für das Ausklappen des Mitnehmers dienen. Es besteht aber die Gefahr, daß die Kante dadurch abgenutzt und unansehnlich wird. Um dies zu verhindern, kann es zweckmäßig sein, den Mitnehmer über eine Kurvenbahn zwangszusteuern. Hier ist es weiter zweckmäßig, wenn der Mitnehmer starr mit einem Führungsbolzen verbunden ist, der während des Hintergreifens des Gurtbandes an einer entsprechend ausgestalteten Kurvenbahn entlangfährt.

Der Antrieb kann auf jede bekannte Art vorgenommen werden. Zweckmäßig jedoch ist es, das Führungselement mit einem Gewindekabel zu verbinden, das wiederum von einem Gewindemotor bewegt wird. Durch die Biegsamkeit des Gewindekabels können bei dieser Art von Antrieb die beengten Platzverhältnisse in einer Fahrzeugseitenwand besser überbrückt werden. Desweiteren ist es vorteilhaft, die Verbindung zwischen Gewindekabel und Führungselement federnd auszuführen. Dadurch erhält man einen sanfteren Bewegungsablauf. Besonders vorteilhaft ist es, die federnde Abstützung des Sperriegels hierfür zu verwenden.

Für die Steuerung des Bewegungsablaufs sind in einfacher Form End- oder Umschalter vorgesehen, die mit entsprechenden Anschlägen am Gewindekabel oder einem mit diesem verbundenen Teil betätigt werden.

Die erfindungsgemäße Vorrichtung ist nicht auf vordere Fahrzeugsitze beschränkt, sie kann auch für die Sicherheitsgurte an Rücksitzen vorgesehen sein, unabhängig davon, ob diese durch eigene Türen zugänglich sind. Ganz allgemein ist die Vorrichtung überall dort verwendbar, wo sich der nicht angelegte Sicherheitsgurt in einer griffungünstigen Position befindet.

Die Vorrichtung läßt sich zu einer kompletten Einheit vormontieren und dann in der Fahrzeugwand befestigen. Dadurch ist eine schnelle Montage in der Serienfertigung möglich.

In der nachfolgenden Beschreibung sind zwei vorteilhafte Ausfürungsbeispiele der Erfindung näher erläutert und in der dazugehörigen Zeichnung dargestellt. Es zeigen

- Fig. 1 eine Fahrzeugtür mit der erfindungsgemäßen Vorrichtung;
- Fig. 2 ein erstes Ausführungsbeispiel der Erfindung
- Fig. 3 ein Gewindekabel zum Hin- und Herbewegen des Führungselements nach Fig. 2;
- Fig. 4 ein Führungselement eines zweiten Ausführungsbeispiels;
- Fig. 5 eine Schnittdarstellung nach dem Schnitt V-V der Fig. 4;
- Fig. 6 eine Schnittdarstellung nach Schnitt VI-VI der Fig. 4 und
- Fig. 7 eine Schnittdarstellung nach VII-VII nach Fig. 4.

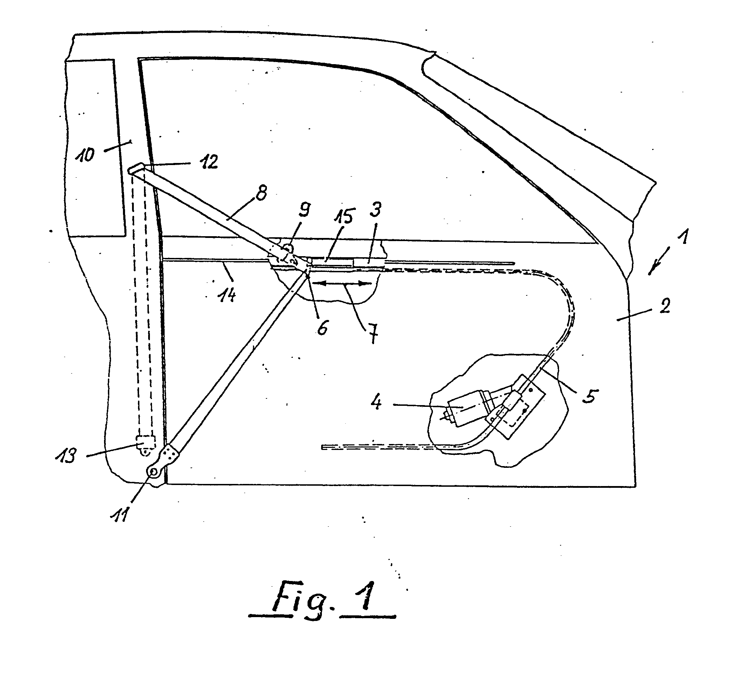

Fig. 1 zeigt teilweise eine Kraftfahrzeugkarosserie mit einer vorderen Fahrzeugtür 1, deren innenverkleidung 2 teilweise weggebrochen ist. Durch die weggebrochenen Teile der Innenverkleidung 2 wird eine erfindungsgemäße Vorrichtung sichtbar mit einer Führungsschiene 3 und einem Gewindemotor 4, der ein Gewindekabel 5 antreibt. Über das Gewindekabel 5 ist in der Führungsschiene 3 ein Mitnehmer 8 in Richtung des Doppelpfeiles 7 hin und her bewegbar. Der Mitnehmer 6 hat das Gurtband 8 eines herkömmlichen Dreipunktsicherheitsgurtes unterhalb deren Schloßzunge 9 ergriffen und verlagert es in Fahrtrichtung nach vorne in eine für den nicht dargestellten Fahrzeuginsassen griffgünstige Position. Das Gurtband selbst erstreckt sich im nicht angelegten und nicht vorgelagerten Zustand entlang einer Mittelsäule 10 der Kraftfahrzeugkarosserie. Es ist dabei an einem Punkt 11 an der Mittelsäule befestigt und läuft über einen Umlenkbeschlag 12 in die Mittelsäule 10 hinein zu einem Gurtaufroller 13 in der Nähe des Befestigungspunktes 11. Für die Verschiebebewegung des Mitnehmers 6 entlang des Pfeiles 7 weist die Innenverkleidung 2 einen schmalen Schlitz 14 auf, durch den der Mitnehmer 6 während des Vorverlagerns des Gurtbandes 8 hindurchtritt.

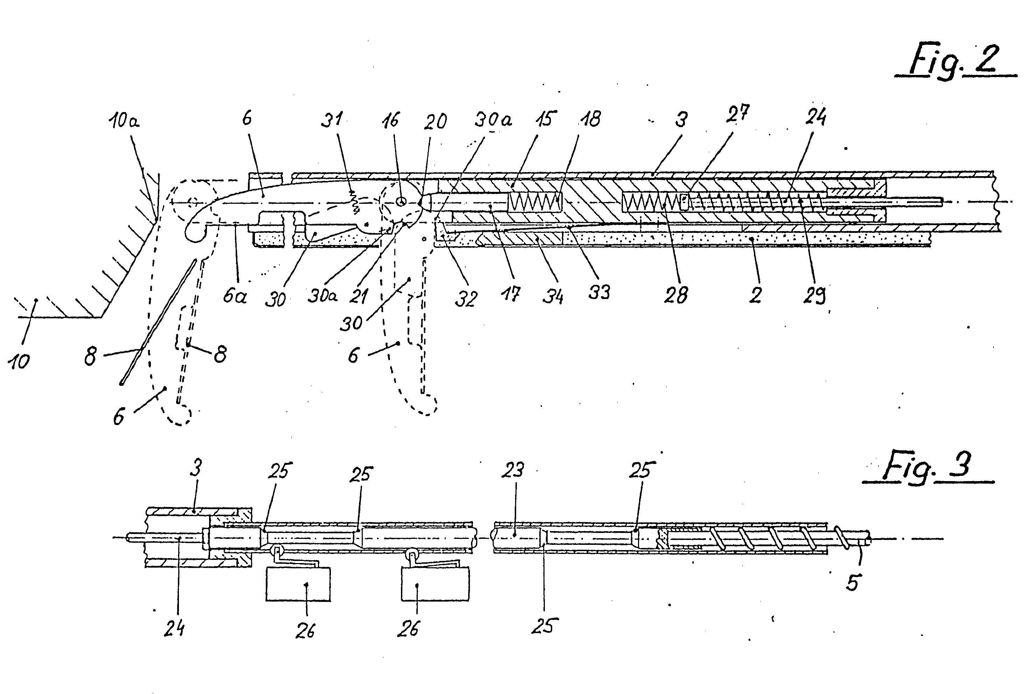

Fig. 2 zeigt im einzelnen die Führung und Halterung des Mitnehmers 6 in der Führungsschiene 3. Dabei ist eine Ansicht von oben gewählt. Die Führungsschiene 3 ist hinter der Innenverkleidung 2 entweder an der Türverkleidung oder an einem nicht weiter dargestellten Türinnenblech befestigt. In der Führungsschiene 3 ist ein Führungselement 15 verschiebbar angeordnet, das an seinem dem Fahrzeugfond zugewandten Ende den Mitnehmer 6 über einen Lagerbolzen 16 drehbar hält. Weiter ist im Führungselement 15 ein Sperriegel 17 vorgesehen, der sich gegen die Kraft einer Feder 18 in das Führungselement 15 hineinschieben läßt. Die Feder 18 stützt sich am Führungselement 15 ab. Der Sperriegel 17 greift mit seinem aus dem Führungselement 15 ragenden Ende in eine Ausnehmung 20 des Mitnehmers 6 ein und arretiert ihn in seiner Stellung. Der Mitnehmer 6 weist eine weitere Ausnehmung 21 für den Sperriegel 17 auf. In diese Ausnehmung 21 greift der Sperriegel 17, wenn der Mitnehmer 6 herausgeklappt ist, wie dies in Fig. 2 in unterbrochenen Strichen angedeutet ist.

Die Verschiebung des Führungselements 15 in der Führungsschiene 3 bewirkt das in Fig. 3 angedeutete Gewindekabel 5. Es weist zu diesem Zweck ein mehrfach abgesetztes Endstück 23 auf, an dem eine in das Führungselement 15 eintauchende Stange 24 (Fig. 2) festgeschraubt ist. Das Endstück 23 arbeitet mit seinen durch die abgesetzten Abschnitte gebildeten Anschlägen 25 mit elektrischen Schaltern 26 zusammen, die wiederum in nicht dargestellter Weise auf den Gewindemotor 4 wirken. Die Stange 24 weist an ihrem im Gleitelement 15 befindlichen Ende einen kolbenähnlichen Teil 27 auf (Fig 2), an dessen beiden Stirnseiten sich jeweils eine Feder 28 und 29 abstützen. Die Federn 28 und 29 dienen zu einem sanften Bewegungsablauf des Führungselements 15.

Der Mitnehmer 6 weist eine dem Gurtband 8 zugeordnete Aufnahmefläche 6a auf. Außerdem ist in ihm eine Verriegelungsfalle 30 drehbar gelagert, die durch eine Feder 31 teilweise aus dem Mitnehmer 6 gedrückt wird und dadurch über die Aufnahmefläche 6a hervorsteht. Desweiteren ist an der Verriegelungsfalle 30 eine Rastnase 30a ausgebildet, die bei ausgeklapptem Mitnehmer 6 mit einem Sperrelement 32 zusammenarbeitet. Das Sperrelement 32 selbst ist mit einer etwa axial zur Führungsschiene 3 ausgerichteten Blattfeder 33 am Führungselement 15 befestigt.

Anhand von Fig. 2 soll nun ein Gurttransport erläutert werden. Dabei ist, wie bereits angedeutet, in Fig. 2 die Ruhephase oder Parkstellung der Vorrichtung mit ausgezogenen Linien dargestellt, während die unterbrochenen Linien die Vorverlagerung zeigen. In der Ruhephase ist der Mitnehmer 6 in die Führungsschiene 3 geklappt und über den Sperrriegel 17 arretiert. Es sei noch angemerkt, daß die Führungsschiene 3 im einfachsten Falle aus einem Rohr besteht mit einem Schlitz für den Durchtritt des Mitnehmers 6. Nach Betätigen eines entsprechenden Schalters an der Tür, im Fahrzeugsitz oder sonstwo wird der Gewindemotor 4 erregt und er verfährt über das Gewindekabel 5 das Gleitelement 15 und den Mitnehmer 6 in Richtung Fahrzeugfond. Der Mitnehmer 6 stößt alsbald an eine Schräge 10a der Mittelsäule 10 und wird dadurch aus seiner Stellung gedrückt. Der Sperriegel 17 schiebt sich in das Führungselement 15. Durch sein allmähliches Herausklappen fährt der Mitnehmer 6 zwischen dem Gurtband 8 und der Mittelsäule 10 hindurch und hintergreift schließlich das Gurtband 8. Der Mitnehmer 6 schwenkt nun endgültig in seine Transportlage. Er steht dabei etwa senkrecht zur Führungsschiene 3 und ragt in das Fahrzeuginnere hinein. In dieser neuen Lage ist er wiederum über den Sperriegel 17 und die Ausnehmung 21 arretiert. Da er in dieser Lage bereits das Gurtband 8 aufgenommen hat, wird die Verriegelungsfalle 30 durch das Gurtband 8 in den Mitnehmer 6 hineingedrückt und deren Rastnase 30a übergreift das Sperrelement 32.

Sobald der Mitnehmer 6 in seine Transportlage geschwenkt ist, schaltet der Gewindemotor um. Der Mitnehmer bewegt sich nun mit dem Gurtband 8 nach vorne bis zu einem Anschlag 34 in der Innenverkleidung 2. In Fig. 2 befindet sich der Mitnehmer 6 kurz vor dem Anschlag 34. Am Anschlag 34 angekommen, läuft der Gewindemotor noch etwas nach. Die Feder 29 wird dadurch zusammengedrückt und vorgespannt. Danach wird der Gewindemotor abgeschaltet. Das Gurtband 8 befindet sich nun in einer für den Fahrzeuginsassen griffgünstigen Position. Nimmt er den Gurt 8 vom Mitnehmer 6 ab, drückt die Feder 31 die Verriegelungsfalle 3D heraus. Die Rastnase 30a gibt das Sperrelement 32 frei. Durch die vorgespannte Feder 29 gleitet das Sperrelement 32 über den Anschlag 34 nach innen. Der Mitnehmer 6 wird an den Anschlag 32 gezogen, und durch ihn in seine eingeklappte Ruhelage gedrängt.

Sobald der Mitnehmer 6 eingeklappt ist, kann der Gewindemotor 4 wieder gestartet werden und das Führungselement 15 in seine ursprüngliche Ruhelage zurückverfahren. Die Steuerung des Getriebemotors 4 nehmen im dargestellten Beispiel die elektrischen Schalter 26 zusammen mit den Anschlägen 25 des Endstückes 23 vor. Es ist jedoch ohne weiteres ersichtlich, daß die Funktion der Vorrichtung nicht von dieser Art der Steuerung abhängig ist. Sind die Platzverhältnisse in der Fahrzeugtür beengt, kann beispielsweise das Endstück 23 weggelassen werden. Die Betätigung der Schalter kann dann durch das Führungselement 15 oder ein mit ihm fest verbundenes Teil vorgenommen werden. Die Impulse für das Umsteuern des Getriebemotors können aber auch auf jede dem Fachmann geläufige Art erzeugt werden. Auch kann dem Gurtschloß ein elektrischer Schalter zugeordnet sein, der nach Einstecken der Schloßzunge den Getriebemotor in Gang setzt.

Sollte der Mitnehmer 6 auf den Weg nach vorn auf einen größeren Widerstand treffen, so drängt er den Sperriegel 17 in das Führungselement 15 und klappt in seine Ruhelage. Der Gurt wir dann durch den Gurtaufroller 13 in seine Ausgangslage zurückgezogen.

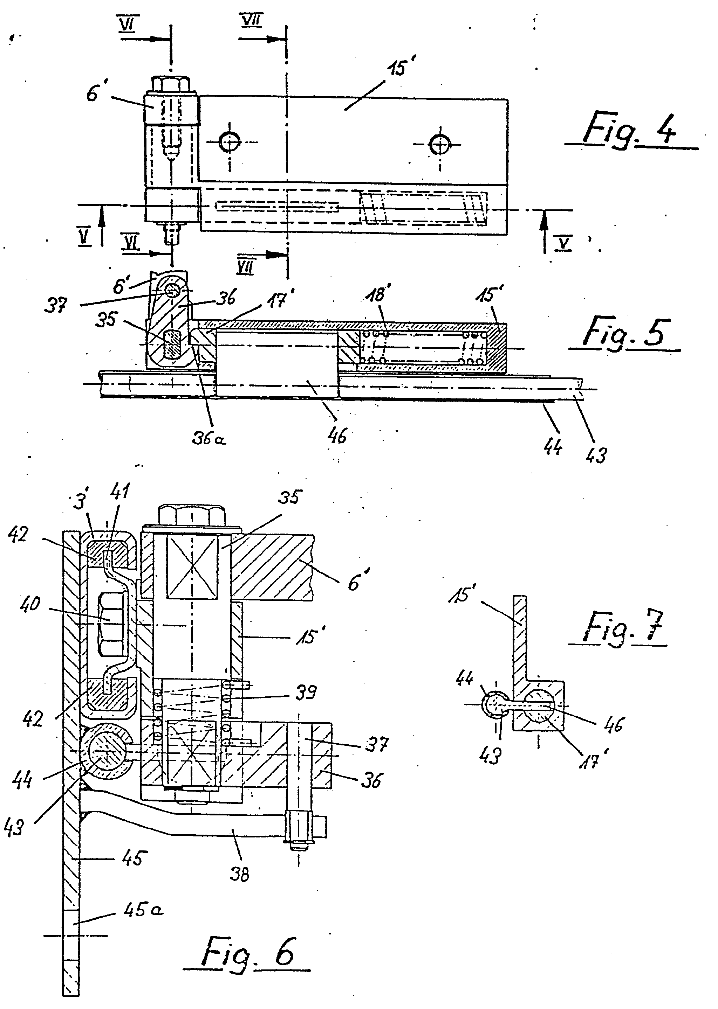

Fig. 4 zeigt ein zweites Ausführungsbeispiel eines Führungselementes 15'. An ihm ist wiederum drehbar ein Mitnehmer 6' gelagert. Wie Fig. 6 zeigt, die zur Verdeutlichung in einem größeren Maßstab dargestellt ist, ist der Mitnehmer 6' über einen im Führungselement 15' drehbar gelagerten Bolzen 35 starr mit einem Hebel 36 verbunden. Am Hebel 36 ist ein Führungsbolzen 37 befestigt, der bei Einleitung der Vorverlagerung des Gurtbandes an einer Kurvenbahn 38 entlangläuft und den Mitnehmer 6' zwangsgesteuert von seiner Ruhelage in seine Transportlage schwenkt. Dabei dreht sich der Mitnehmer gegen die Kraft einer Feder 39 aus seiner Ruhelage heraus, ohne die Mittelsäule 10 zu berühren.

Das Führungselement 15' ist in einer Führungsschiene 3' verschiebbar gehalten. Zu diesem Zweck weist das Führungselement 15' vorteilhaft einen mit Schrauben 40 befestigten Bügel 41 auf. An den Ende des Bügels 41 sind Gleitschuhe 42 vorgesehen, die in die Führungsschiene 3' eingreifen. Die Verschiebung des Führungselements 15' bewirkt wiederum ein Endstück 43 eines nicht weiter dargestellten Gewindekabels. Das Endstück 43 verläuft innerhalb einer zum Führungselement 15' hin geschlitzten und der Führungsschiene 3' benachbart angeordneten Führungshülse 44. Führungsschiene 3', Kurvenbahn 38' und Führungshülse 44 sind an einer Platte 45 durch Schweißen oder ähnlichem befestigt. Die Platte 45 selbst läßt sich über die Durchgangslöcher 45a an einem Türinnenblech oder ähnlichem festschrauben.

Wie Fig. 5 zeigt, weist der Hebel 36 eine Rastnase 36a auf, die mit einem Sperriegel 17' zusammenwirkt. Der Sperriegel 17' ist verschiebbar in dem Führungselement 15' gehalten und stützt sich über eine Feder 18' an diesem ab. Außerdem ist im Sperriegel 17' ein Plättchen 46 eingelassen, das wiederum fest mit dem Endstück 43 des Gewindekabels verbunden ist (Fig. 7). Im Normalfall bewegt das Gewindekabel über sein Endstück 43, Plättchen 46 und Sperriegel 17' das Führungselement 15' und damit den Mitnehmer 6'. Stößt der Mitnehmer 6' nun bei seiner in Fahrtrichtung nach vorn gerichteten Bewegung auf ein Hindernis, so verschiebt sich der Sperriegel 17' gegen die Kraft der Feder 18' relativ zum Führungselement 15'. Er gibt dabei die Rastnase 36a des Hebels 36 frei und die Federn 39 klappt den Mitnehmer 6' in seine Ruhelage in die Fahrzeugtür zurück.

Im übrigen verläuft der Transportvorgang entsprechend ab wie beim ersten Ausführungsbeispiel. Nach der Gurtabnahme fährt das Führungselement 15' noch etwas nach vorne, bis der Mitnehmer 6' oder der Bolzen 37 auf einen ortsfesten Anschlag stößt und der Mitnehmer 6' in seine Ruhelage zurückgeklappt wird.

In einem anderen Ausführungsbeispiel, das nicht dargestellt ist, kann der Führungsbolzen 37 auch direkt am Mitnehmer 6' befestigt sein. Außerdem kann zwischen dem antreibenden Gewindekabel und dem Endstück 43 eine Pämpfungsfeder dazwischen geschaltet sein für ein sanftes Ingangsetzen der Bewegungsabläufe.

So kann auch beispielsweise der Mitnehmer 6 nach Fig. 2 statt über die Mittelsäule 10 auch über eine Kurvenbahn ähnlich der nach Fig. 6 in seine Transportstellung geklappt werden.

**Patentansprüche**

1. Vorrichtung zum Verlagern eines Gurtbandes (8) in eine griffgünstige Position in Kraftfahrzeugen, mit einer in einer Fahrzeugseitenwand, insbesondere in einer Fahrzeugtür (1), vorgesehenen Führungsschiene (3) und einem darin in Fahrtrichtung hin und her bewegbaren, einen Mitnehmer (6, 6') aufweisenden Führungselement (15, 15'), wobei der Mitnehmer (6, 6') beim Verlagern das Gurtband (8) hintergreift und es in Fahrtrichtung nach vorne transportiert und dabei in einer etwa senkrecht zur Führungsschiene (3) stehenden Lage in das Fahrzeuginnere ragt, dadurch gekennzeichnet, daß der Mitnehmer (6; 6') beweglich am Führungselement (15; 15') gehalten ist.

2. Vorrichtung nach Anspruch 1, dadurch gekennzeichnet, daß der Mitnehmer (6; 6') während der Ruhephase zumindest annähernd hinter die innere Oberfläche der Fahrzeugseitenwand zurückverlagert ist und von dieser Ruhelage in die ins Fahrzeuginnere ragende Arbeitsstellung für den Gurtbandtransport überführbar ist.

3. Vorrichtung nach Anspruch 2, dadurch gekennzeichnet, daß der Mitnehmer (6; 6') drehbar am Führungselement (15; 15') angelenkt ist.

4. Vorrichtung nach einem oder mehreren der Ansprüche 1-3 , dadurch gekennzeichnet, daß der Mitnehmer (6; 6') wenigstens während des Vorverlagerns in seiner Lage arretiert ist.

5. Vorrichtung nach Anspruch 4, dadurch gekennzeichnet, daß im Führungselement (15; 151) gegen die Kraft einer Feder (18; 18') verschiebbar ein Sperriegel (17; 17') gelagert ist, der in eine Ausnehmung (20; 21) oder Rastnase (36a) des Mitnehmers (6; 6') oder eines mit diesem starr verbundenen Teil (36) einrastbar ist.

6. Vorrichtung nach einem oder mehreren der Ansprüche 1-5, dadurch gekennzeichnet, daß der Mitnehmer (6; 6') beim Verfahren des Führungselementes (15; 15') über Steuerkanten in seine jeweilige Lage geklappt wird.

7. Vorrichtung nach Anspruch 6, dadurch gekennzeichnet, daß die Steuerkanten als Anschläge (10a; 34) in der Fahrzeugseitenwand ausgebildet sind.

8. Vorrichtung nach Anspruch 6 oder 7 dadurch gekennzeichnet, daß der Mitnehmer (6') starr mit einem Führungsbolzen (37) verbunden ist, der bei Einleitung der Vorverlagerung mit einer Kurvenbahn (38) zusammenarbeitet.

9. Vorrichtung nach einem oder mehreren der Ansprüche 1-8, gekennzeichnet durch folgende Merkmale:
- In dem Mitnehmer (6) ist eine mit einer Rastnase (30a) versehene Verriegelungsfalle (30) drehbar gehalten, die durch eine Feder (31) teilweise über die dem Gurtband (8) zugeordneten Aufnahmefläche (6a) des Mitnehmers (6) hervorsteht;
- am Führungselement (15) ist ein Sperrelement (32) befestigt über eine etwa axial zur Führungsschiene (3) ausgerichteten Blattfeder (33)
- das Sperrelement (32) greift während des Vorverlagern in die Rastnase (30a) der Verriegelungsfalle (30) ein.

10. Vorrichtung nach einem oder mehreren der Ansprüche 1-9, dadurch gekennzeichnet, daß der Mitnehmer (6') gegen Federkraft (39) in seine Transportlage klappbar ist.

11. Vorrichtung nach einem oder mehreren der Ansprüche 1-10, dadurch gekennzeichnet, daß das Führungselement (15; 15') mit einem von einem Gewindemotor (4) antreibbaren Gewindekabel (5) verbunden ist.

12. Vorrichtung nach Anspruch 11, dadurch gekennzeichnet, daß die Verbindung zwischen Gewindekabel (5) und Führungselement (15; 15') federnd ausgeführt ist.

13. Vorrichtung nach Anspruch 12, dadurch gekennzeichnet, daß das Gewindekabel (5) am Sperriegel (17') befestigt und in einer in der Nachbarschaft der Führschiene (3) angeordneten, geschlitzten Führungshülse (44) verschiebbar gehalten ist.

14. Vorrichtung nach einem oder mehreren der Ansprüche 11-13, dadurch gekennzeichnet, daß das Gewindekabel (5) oder Führungselement (15; 15') oder ein mit diesem fest verbundenes Teil (23) Anschläge (25) aufweist für die Betätigung von auf den Gewindemotor wirkenden elektrischen Schaltern (26).

15. Vorrichtung nach einem oder mehreren der Ansprüche 1-14, dadurch gekennzeichnet, daß zwischen dem Führungselement (15, 15') und dem Gewindekabel (5) wenigstens eine Dämpfungsfeder vorgesehen ist.

## Claims

1. A device for displacing a belt (8) in motor vehicles into a favourable position for grasping it, comprising a guide rail (3) provided in a vehicle side wall, especially in a vehicle door (1), and a guide element (15, 15') which is movable to and fro therein in the direction of driving and which includes an engaging element (6, 6') whereby the engaging element (6, 6'), on being displaced, engages behind the belt (8) and transports it forwards in the driving direction and, in so doing, protrudes into the interior of the vehicle in a position approximately at right angles to the guide rail (3), characterised in that the engaging element (6, 6') is held movably on the guide element (15; 15').

2. A device according to Claim 1, characterised in that the engaging element (6; 6'), during its rest phase, is displaced back at least approximately behind the inner surface of the vehicle side wall and is transferrable from this rest position into the working position where it protrudes into the vehicle interior for the transport of the belt.

3. A device according to Claim 2, characterised in that the engaging element (6; 6') is rotatably articulated to the guide element (15; 15').

4. A device according to one or more of Claims 1 - 3, characterised in that the engaging element (6; 6') is arrested in its position at least during forward displacement.

5. A device according to Claim 4, characterised in that a locking bolt (17; 17') is mounted in the guide element (15; 15') so as to be displaceable against the force of a spring (18; 18'), which bolt is capable of snapping into a recess (20; 21) or catch nose (36a) of the engaging element (6; 6') or of a part (36) rigidly connected therewith.

6. A device according to one or more of Claims 1 - 5, characterised in that the engaging element (6; 6') is hinged into its position in each case by means of control edges in the movement of the guide element (15; 15,).

7. A device according to Claim 6, characterised in that the control edges are formed as stops (10a; 34) in the side wall of the vehicle.

8. A device according to Claim 6 or 7, characterised in that the engaging element (6') is rigidly connected to a guide bolt (37) which cooperates with a cam path (38) on initiation of the forward displacement.

9. A device according to one or more of Claims 1 - 8, characterised by the following features :
- in the engaging element (6) a locking catch (30) provided with a detent nose (30a) is rotatably held which, due to a spring (31), protrudes partially beyond the reception surface (6a) of the engaging element (6) allocated to the belt (8);
- on the guide element (15), a locking element (32) is secured by means of a leaf spring (33) orientated approximately axially in relation to the guide rail (3),
- the locking element (32) engages during forward displacement in the detent nose (30a) of the locking catch (30).

10. A device according to one or more of Claims 1 - 9, characterised in that the engaging element (6') is hingeable against spring force (39) into its transport position.

11. A device according to one or more of Claims 1 - 10, characterised in that the guide element (15; 15') is connected with a threaded cable (5) drivable by a threading motor (4).

12. A device according to claim 11, characterised in that the connection between threaded cable (5) and guide element (15; 15') is made resilient.

13. A device according to Claim 12, characterised in that the threaded cable (5) is secured to the locking bolt (17') and held displaceably in a slotted guide sleeve (44) arranged in the vicinity of the guide rail (3).

14. A device according to one or more of Claims 11 - 13, characterised in that the threaded cable (5) or guide element (15; 15') or a part (23) firmly connected therewith comprises stops (25) for the actuation of electric switches (26) acting upon the threading motor.

15. A device according to one or more of Claims 1 - 14, characterised in that at least one damping spring is provided between the guide element (15, 15') and the threaded cable (5).

## Revendications

1. Dispositif pour déplacer une ceinture de sécurité (8) vers une position favorable à la prise dans des véhicules à moteur, comportant un rail de guidage securite (8) vers une position favorable à la prise dans des véhicules à moteur, comportant un rail de guidage (3) prévu dans la paroi latérale du véhicule notamment dans une portière (1), et d'un élément de guidage (15, 15') comportant un organe d'entraînement (6, 6') et mobile alternativement dans ce rail de guidage, dans la direction de déplacement du véhicule, l'organe d'entraînement (6') venant prendre, par déplacement, derrière la ceinture (6) et transférant celle-ci vers l'avant dans le sens de déplacement du véhicule, et venant alors en saillie à l'intérieur du véhicule, dans une position sensiblement perpendiculaire au rail de guidage (3), caractérisé en ce que l'organe d'entraînement (6, 6') est maintenu mobile sur l'élément de guidage (15, 15,).

2. Dispositif selon la revendication 1, caractérisé en ce que, pendant la phase de repos, l'organe d'entraînement (6, 6') est décalé en arrière, au moins approximativement derrière la surface apparente interne de la paroi latérale interne du véhicule, et peut passer de cette position de repos dans une position de travail pour le transfert de la ceinture, position dans laquelle il est en saillie vers l'intérieur du véhicule.

3. Dispositif selon la revendication 2, caractérisé en ce que l'organe d'entraînement (6, 6') est articulé de manière rotative sur l'élément de guidage (15, 15,).

4. Dispositif l'une ou plusieurs des revendications 1 à 3, caractérisé en ce que l'organe d'entraînement (6, 6') est bloqué dans sa position au moins pendant le déplacement vers l'avant.

5. Dispositif selon la revendication 4, caractérisé en ce qu'un verrou (17, 17') est logé coulissant dans l'élément de guidage (15, 15') contre la force développée par un ressort (16, 16'), ce verrou venant s'enclencher dans une cavité (20, 20') ou sur le bec d'encliquetage (36a) de l'organe d'entraînement (6, 6') ou d'une pièce (36) reliée rigidement à celui-ci.

6. Dispositif selon l'une ou plusieurs des revendications 1 à 5, caractérisé en ce que l'organe d'entraînement (6, 6') est basculé dans sa position respective lors du déplacement de l'élément de guidage (15, 15') par dessus les arêtes de commande.

7. Dispositif selon la revendication 6, caractérisé en ce que les arêtes de commande sont réalisées sous la forme de butées (10a, 34) dans la paroi latérale du véhicule.

8. Dispositif selon la revendication 6 ou 7, caractérisé en ce que l'organe d'entraînement (6') est relié rigidement à un goujon de guidage (37) qui coopère avec un chemin courbe (36) lorsque commence le mouvement vers l'avant.

9. Dispositif selon une ou plusieurs des revendications 1 à 8, caractérisé par les points suivants :
- un pêne (30) muni d'un bec d'encliquetage (30a) est prévu dans l'organe d'entraînement (6) de manière à pouvoir pivoter, ce pêne soumis à l'action d'un ressort (31) venant partiellement en saillie par rapport à la surface de réception (6a) de l'organe d'entraînement (6) associé à la ceinture (8) sous l'effet d'un ressort (31) ;
- un élément de verrouillagé (32) est fixé à l'élément de guidage (15) par l'intermédiaire d'un ressort lame (33) aligné sensiblement dans l'axe du rail de guidage (3),
- l'élément de verrouillage (32) vient prendre dans le bec d'encliquetage (30a) du pêne (30) lors du mouvement d'avancée.

10. Dispositif selon l'une ou plusieurs des revendications 1 à 9, caractérisé en ce que l'organe d'entraînement (6') peut basculer dans sa position de transport contre la force d'un ressort (39).

11. Dispositif selon l'une ou plusieurs des revendications 1 à 10, caractérisé en ce que l'élément de guidage (15, 15') est relié à un câble fileté (5) susceptible d'être entraîné par un moteur de filetage (4).

12. Dispositif selon la revendication 11, caractérisé en ce que la liaison entre le câble fileté (5) et l'élément de guidagé (15, 15') est élastique.

13. Dispositif selon la revendication 12, caractérisé en ce que le câble fileté (5) est fixé au verrou (17') et est maintenu de manière coulissante dans une douille de guidage (44), fendue, prévue au voisinage du rail de guidage (3).

14. Dispositif selon l'une ou plusieurs des revendications 11 à 13, caractérisé en ce que le câble fileté (5) ou l'élément de filetage (15, 15') ou une pièce (23) solidaire de celui-ci comporte des butées (25) pour actionner des commutateurs électriques (26) agissant sur le moteur de filetage.

15. Dispositif selon l'une ou plusieurs des revendications 1 à 14, caractérisé par au moins un ressort d'amortissement prévu entre l'élément de guidage (15, 15') et le cable filété (5).

Fig. 1

_Fig. 2_

_Fig. 3_

0116839

Fig. 4

Fig. 5

Fig. 6

Fig. 7